# EUROPÄISCHE PATENTSCHRIFT

(11) **EP 1 164 316 B1**
(45) Veröffentlichungstag und Bekanntmachung des Hinweises auf die Patenterteilung: **25.11.2009**
(21) Anmeldenummer: 01112674.5
(22) Anmeldetag: 25.05.2001
(51) Int. Cl.: F16H 63/30

(54) **Hydraulische Stellvorichtung für die Betätigung einer Schaltstange**
Hydraulic actuator for a shifting rod
Actionneur hydraulique pour une tringle de commande d'une boîte de vitesse

(30) Priorität: 09.06.2000 DE 10028682
(43) Veröffentlichungstag der Anmeldung: 19.12.2001
(73) Patentinhaber: FTE automotive GmbH, 96106 Ebern (DE)
(72) Erfinder: Reul, Alexander, 96158 Frensdorf (DE); Stössel, Roland, 97514 Oberaurach (DE); Kestler, Günter, 96110 Schesslitz (DE)
(74) Vertreter: Oppermann, Mark

(56) Entgegenhaltungen:
- DE-A1- 19 725 226
- FR-A- 1 091 419
- GB-A- 2 045 389
- US-A- 3 059 743

## Beschreibung

Die vorliegende Erfindung bezieht sich auf eine hydraulische Stellvorrichtung für die Betätigung einer Schaltstange gemäß dem Oberbegriff des Patentanspruchs 1. Insbesondere bezieht sich die Erfindung auf eine hydraulische Stellvorrichtung für die Betätigung einer Schaltstange eines Schaltgetriebes für Kraftfahrzeuge.

Im Stand der Technik sind hydraulische Stellvorrichtungen für Kraftfahrzeug-Schaltgetriebe bekannt, die einen Stellzylinder haben, der dazu dient, eine an einer Schaltstange des Getriebes befestigte Schaltgabel für einen Gangwechsel zu betätigen und zu positionieren. Diese Stellzylinder haben herkömmlicherweise ein metallisches Zylindergehäuse, welches über einen Flansch an das heutzutage üblicherweise aus einer Leichtmetallegierung bestehende Getriebegehäuse des Schaltgetriebes angeschraubt ist. In einer Zylinderbohrung des Zylindergehäuses ist mindestens ein metallischer Kolben axial verschiebbar angeordnet, der mit der Schaltstange wirkverbunden ist, um diese bei hydraulischer Beaufschlagung des Stellzylinders zu verschieben.

Um diese Konstruktion zu vereinfachen, wurde in der DE-A-34 10 802 eine Schaltvorrichtung für Wechselgetriebe von Nutzfahrzeugen vorgeschlagen, bei der die Enden einer eine Schaltgabel tragenden, im Hinblick auf die mechanischen Festigkeitserfordernisse metallischen Schaltstange in zwei als Druckmittelzylinder ausgebildeten Führungen gelagert sind, die einen Teil des Getriebegehäuses bilden können. Hierbei dienen die beiden Stirnflächen der Schaltstange als gleich große Kolbenflächen, über die die Schaltstange druckmittelbeaufschlagbar ist, um die Schaltstange zu verschieben, d.h. die Schaltstange selbst ist bei diesem Stand der Technik als von entgegengesetzten Seiten auf gleich großen Flächen durch ein Druckmittel beaufschlagbarer Kolben ausgebildet. Ein Nachteil dieses Stands der Technik ist darin zu sehen, daß die in gegenüberliegenden Wänden des Getriebegehäuses ausgebildeten Führungen in herstellungstechnisch aufwendiger Weise exakt miteinander fluchten müssen, damit die einstückig als Kolben ausgebildete Schaltstange bei ihrer Längsbewegung in den Führungen nicht klemmt.

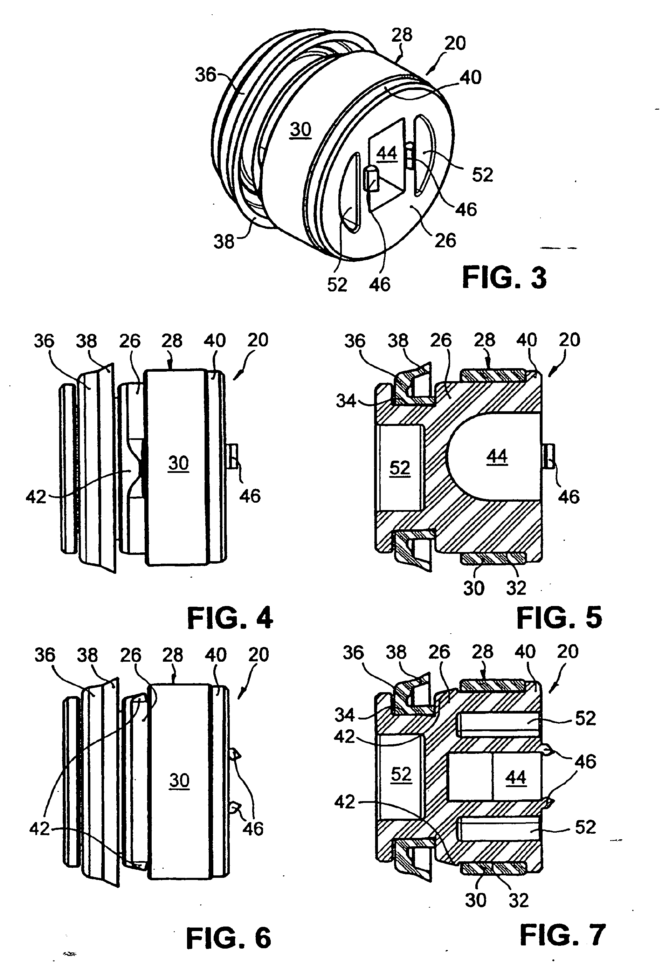

Ferner sind Lager- bzw. Führungssysteme zur Unterstützung der Längsbewegung von Schaltschienen für Kraftfahrzeug-Schaltgetriebe bekannt (Looman, Johannes: Zahnradgetriebe: Grundlagen, Konstruktionen, Anwendungen in Fahrzeugen; 3. Auflage; Springer-Verlag 1996; Seite 154: Abb. 6.10), welche zu beiden Seiten der Schaltschiene angeordnete Lagereinheiten aufweisen. Diese Lagereinheiten sind jeweils zweiteilig ausgebildet und bestehen aus einer dünnwandigen Hülse mit Montagetrichter sowie einer Innenlaufbahnhülse mit Kugelkranz. Die erste, aus einem Stahlband gezogene und einsatzgehärtete Hülse dient der Auskleidung einer entsprechenden Bohrung in einer Wandung des Getriebegehäuses, während die auffedernde Innenlaufbahnhülse dem jeweiligen Ende der Schaltschiene zugeordnet ist. Zwar bewirken die Lagereinheiten unter einer radial im wesentlichen spielfreien Führung eine leichte axiale Verschiebbarkeit der Schaltschiene. Hierfür wird jedoch ein erheblicher vorrichtungstechnischer Aufwand betrieben.

Des weiteren offenbart die DE-A-197 25 226 eine Kolben-Zylinder-Anordnung für die Schaltschiene eines Schaltgetriebes, bei der am rechts- und linksseitigen Ende der Schaltschiene Kolben angeordnet sind, die aus Kunststoff bestehen können. Jeder Kolben ist in einen Zylindertopf eingesetzt, der einen Außengewindeabschnitt aufweist. Der Zylindertopf ist mit seinem Außengewindeabschnitt in einen Innengewindeabschnitt eines Durchgangs- oder Sacklochs der Getriebe- oder Kupplungsgehäusewand eingeschraubt und weist an seinem Boden ein Element zur Dämpfung des Kolbenanschlags auf. Zwar kann bei diesem Stand der Technik der Kolbenanschlag durch Verdrehen des Zylindertopfs im jeweiligen Gewindeloch der Getriebe- oder Kupplungsgehäusewand in axialer Richtung eingestellt werden. Insbesondere die Ausbildung der Gewindeabschnitte bedingt allerdings einen erheblichen fertigungstechnischen Aufwand, der die Gestehungskosten in bei der Massenfertigung von Schaltgetrieben für Kraftfahrzeuge unerwünschter Weise erhöht.

Eine hydraulische Stellvorrichtung gemäß dem Oberbegriff des Patentanspruchs 1 ist aus der FR-A-1 091 419 bekannt.

Der Erfindung liegt die Aufgabe zugrunde, eine gegenüber dem Stand der Technik einfacher ausgebildete und kompakter bauende hydraulische Stellvorrichtung für die Betätigung einer Schaltstange zu schaffen.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 9.

Erfindungsgemäß besteht bei einer hydraulische Stellvorrichtung entsprechend dem Oberbegriff des Patentanspruchs 1 das Getriebegehäuse aus einer Leichtmetallegierung, während der Kolben und der Führungsabschnitt aus Kunststoff bestehen, wobei letzterer durch einen an einem Führungssitz des Grundkörpers angeordneten Führungsring ausgebildet ist, der formschlüssig am Führungssitz befestigt ist, indem der Führungsring zwischen einem am Grundkörper ausgebildeten Bund und mindestens einem vom Grundkörper in radialer Richtung vorstehenden Vorsprung auf dem Führungssitz angeordnet ist.

Somit dient der Kolben in vorteilhafter Weise sowohl der Verschiebung als auch der definierten Führung bzw. Lagerung der Schaltstange, ohne daß hierfür zusätzliche aufwendige Lagerteile wie Laufbahnhülsen mit Kugelkränzen oder dergl. notwendig wären. Weiterhin wird ein bauraumbeanspruchendes separates Zylindergehäuse nicht mehr benötigt, weil die den Kolben führende Zylinderbohrung direkt in einer Wandung des aus einer Leichtmetallegierung, insbesondere einer Aluminium- oder Magnesiumlegierung bestehenden Getriebegehäuses eingebracht ist. Schließlich sind aufwendige Auskleidungen der Zylinderbohrung etwa mit Stahlhülsen oder dergl. entbehrlich, nachdem sich überraschenderweise gezeigt hat, daß die Paarung Kolben mit Führungsabschnitt aus Kunststoff und Zylinderbohrung in Leichtmetallegierung unter den gegebenen Bedingungen, die sich durch hydraulische Systemdrücke zwischen 20 und 40 bar und Umgebungstemperaturen von z.T. über 120°C im Ölnebel auszeichnen, bei einem guten Verschleißverhalten sowie einer ausreichenden Selbstschmierung und -entlüftung die erforderlichen Führungseigenschaften gewährleistet. Im Ergebnis lassen sich mit der erfindungsgemäßen Ausgestaltung der Stellvorrichtung gegenüber herkömmlichen Stellvorrichtungsausbildungen nicht unerhebliche Bauraum-, Gewichts- und Kostenersparnisse erzielen, was einen Einsatz solcher Stellvorrichtungen in der Großserie ermöglicht.

Dabei ist der Führungsring des Kolbens auf vorteilhaft einfache Weise, d.h. ohne zusätzliche Befestigungsmittel wie Klebstoff oder dergl. formschlüssig am Führungssitz befestigt. Hierzu ist der Kolben mit einem am Grundkörper des Kolbens ausgebildeten Bund und mindestens einem vom Grundkörper in radialer Richtung geringfügig vorstehenden Vorsprung versehen, wobei der Führungsring zwischen dem Bund und dem Vorsprung auf dem Führungssitz des Grundkörpers angeordnet ist. Zur Montage des hülsenförmigen Führungsrings ist dieser unter einer geringfügigen partiellen Aufweitung an dem Vorsprung von der vom Bund abgewandten Seite des Grundkörpers auf einfache Weise in Richtung des Bunds auf den Grundkörper aufzuschieben.

Wenn der Führungsabschnitt des Kolbens durch einen am Führungssitz des Grundkörpers angeordneten Führungsring ausgebildet wird, sollte der Grundkörper des Kolbens in kostengünstiger Weise aus vorzugsweise langfaserverstärktem Polyamid (PA) bestehen. Im Hinblick auf gute Führungseigenschaften und ein gutes Verschleißverhalten hat es sich nach dem Patentanspruch 2 dann als vorteilhaft herausgestellt, wenn als Material für den Führungsring Polyphthalamid (PPA) oder Polyphenylensulfid (PPS) zum Einsatz kommt.

Insbesondere bei der oben beschriebenen Kolbenausführung (Grundkörper aus PA und Führungsring aus PPA oder PPS) weist der Grundkörper auf der dem Druckraum zugewandten Seite des Führungsabschnitts vorzugsweise eine Radialnut oder einen Absatz auf, wie im Patentanspruch 4 angegeben, in der bzw. auf dem ein an sich bekannter Nutring angeordnet ist, dessen dynamische Dichtlippe vom Druckraum weggewandt ist, d.h. der in einer zur Normallage umgekehrten Funktionslage angeordnet ist. Dies hat den Vorteil, daß die Zylinderbohrung in der Wandung des Getriebegehäuses nicht eng toleriert werden muß und somit kostengünstig gefertigt werden kann. Bestehende Spaltmaße zwischen der Zylinderbohrung und dem Kolben werden dann durch die dynamische Dichtlippe des Nutrings überbrückt. Somit verhindert der Nutring im nicht-betätigten, drucklosen Zustand der Stellvorrichtung ein Auslaufen der Hydraulikflüssigkeit aus dem Druckraum, während er je nach Vorspannung der dynamischen Dichtlippe im Sumpfbetrieb, bei dem das Getriebeöl auch als Hydraulikmittel für die Stellvorrichtung dient und von dort als Leckage- oder Rücklauföl direkt in die Getriebewanne ablaufen kann, eine definierte Leckage mit einem zusätzlichen Schmiereffekt und einer permanenten Selbstentlüftung der Stellvorrichtung ermöglicht.

Bei der Kolbenausführung entsprechend dem Patentanspruch 3, gemäß dem der Grundkörper des Kolbens kostengünstig aus Polyamid (PA) besteht, während es sich bei dem Material des Führungsrings um Polytetrafluorethylen (PTFE) handelt, haben Untersuchungen der Anmelderin zu dem überraschenden Ergebnis geführt, daß die oben beschriebenen Effekte in vorteilhafter Weise auch ohne Nutring erzielt werden können. Hier kann der aus PTFE bestehende Führungsring in der herstellungstechnisch vorteilhaft großzügig tolerierbaren Zylinderbohrung sowohl eine Führungs- als auch eine Dichtfunktion übernehmen. Im Betrieb unter hydraulischen Drücken bis 40 bar und Betriebstemperaturen bis über 120°C gleicht der Führungsring dann nämlich durch Volumenveränderung bzw. Stauchung selbsttätig ein übermäßiges Spiel zwischen Kolben und Zylinderbohrung aus.

Gemäß dem Patentanspruch 5 weist der Grundkörper an einem Ende eine Radialnut auf, in die ein Kunststoffring eingesetzt ist, der außenumfangsseitig mit einer Mehrzahl von mit der Zylinderbohrung zusammenwirkenden Stützvorsprüngen versehen ist. Der Kunststoffring dient in vorteilhafter Weise als Montagehilfe, die bei der Montage des Getriebes verhindert, daß die mit dem in die entsprechende Zylinderbohrung eines ersten Getriebegehäuseteils eingesteckten Kolben wirkverbundene Schaltstange, die während der Montage des Getriebes steht, d.h. sich in vertikaler Richtung erstreckt, aufgrund ihrer ungleichförmigen Ausbildung in unerwünschter Weise aus der Längsachse der Zylinderbohrung kippt. Somit braucht der am gegenüberliegenden Ende der Schaltstange vorgesehene Kolben beim Fügen eines weiteren Getriebegehäuseteils zum ersten Getriebegehäuseteil nicht mehr von Hand ausgerichtet und in die entsprechende Zylinderbohrung des weiteren Getriebegehäuseteils eingeführt werden. Zudem verhindert der Kunststoffring eine übermäßige einseitige Belastung des Führungsabschnitts des Kolbens und des ggf. am Kolben vorgesehenen Nutrings. Die obigen Wirkungen während der Montage bzw. des Betriebs können noch unterstützt werden, wenn - wie im Patentanspruch 6 angegeben - der Grundkörper an seinem anderen Ende einen Bund hat, der außenumfangsseitig mit einer Mehrzahl von mit der Zylinderbohrung zusammenwirkenden Stützvorsprüngen versehen ist. Darüber hinaus hat diese Ausbildung der Stellvorrichtung den Vorteil, daß ein Verklemmen, Verkeilen bzw. einseitiges Anstauchen des insbesondere aus PTFE bestehenden Führungsrings in der Anfangsphase des Betriebs zuverlässig vermieden wird, bis der Führungsring im Betrieb die oben bereits angesprochene Volumenänderung bzw. eine gleichmäßige Stauchung erfahren hat und somit einen größeren Traganteil bei verbesserter Dichtwirkung übernimmt.

Der Patentanspruch 7 sieht vor, daß die Schaltstange mit dem Kolben mittels einer einfachen Schnappverbindung verbunden ist, was eine kostengünstige und leichte Montage der Stellvorrichtung begünstigt. Zweckmäßig ist hierbei der Kolben mit einer Aussparung zur Aufnahme eines Endes der Schaltstange versehen und weist eingangs der Aussparung mindestens eine Nase auf, die in einer zugeordneten Vertiefung der Schaltstange eingerastet ist, wie im Patentanspruch 8 angegeben.

Gemäß dem Patentanspruch 9 ist der Grundkörper des Kolbens schließlich einteilig aus Kunststoff spritzgegossen, was eine kostengünstige Herstellung ohne die Notwendigkeit einer Nachbearbeitung gewährleistet.

Im folgenden wird die Erfindung anhand bevorzugter Ausführungsbeispiele unter Bezugnahme auf die beigefügte Zeichnung näher erläutert. Darin zeigen:
- Fig. 1: eine abgebrochene Längsschnittansicht einer erfindungsgemäßen Stellvorrichtung nach einem ersten Ausführungsbeispiel, mit einem in einer Zylinderbohrung angeordneten Kolben, der nicht geschnitten dargestellt ist,
- Fig. 2: eine abgebrochene Längsschnittansicht der Stellvorrichtung gemäß Fig. 1, wobei die Schnittebene gegenüber der Schnittebene in Fig. 1 um 90° um die Längsachse des Kolbens gedreht ist,
- Fig. 3: eine perspektivische Darstellung des Kolbens der Stellvorrichtung gemäß Fig. 1 mit am Grundkörper angeordnetem Nutring und Führungsring,
- Fig. 4: eine Seitenansicht des Kolbens gemäß Fig. 3,
- Fig. 5: eine Längsschnittansicht des Kolbens gemäß Fig. 4,
- Fig. 6: eine Seitenansicht des Kolbens gemäß Fig. 3, der gegenüber der Darstellung in Fig. 4 um 90° um seine Längsachse gedreht ist,
- Fig. 7: eine Längsschnittansicht des Kolbens gemäß Fig. 6,
- Fig. 8: eine perspektivische Darstellung des Grundkörpers des Kolbens gemäß Fig. 3, ohne Nutring und ohne Führungsring,
- Fig. 9: eine Längsschnittansicht des Grundkörpers gemäß Fig. 8,
- Fig. 10: eine Längsschnittansicht des Grundkörpers gemäß Fig. 8, wobei die Schnittebene gegenüber der Schnittebene in Fig. 9 um 90° um die Längsachse der Grundkörpers gedreht ist,
- Fig. 11: eine vergrößerte Darstellung des Details X in Fig. 10,
- Fig. 12: eine Ansicht des Grundkörpers von links in Fig. 10,
- Fig. 13: eine Ansicht des Grundkörpers von rechts in Fig. 10,
- Fig. 14: eine perspektivische Darstellung eines Kolbens einer erfindungsgemäßen Stellvorrichtung nach einem zweiten Ausführungsbeispiel,
- Fig. 15: eine Seitenansicht des Kolbens gemäß Fig. 14,
- Fig. 16: eine Längsschnittansicht des Kolbens gemäß Fig. 14 und
- Fig. 17: eine perspektivische Darstellung eines auf den Kolben gemäß Fig. 14 aufschnappbaren Kunststoffrings.

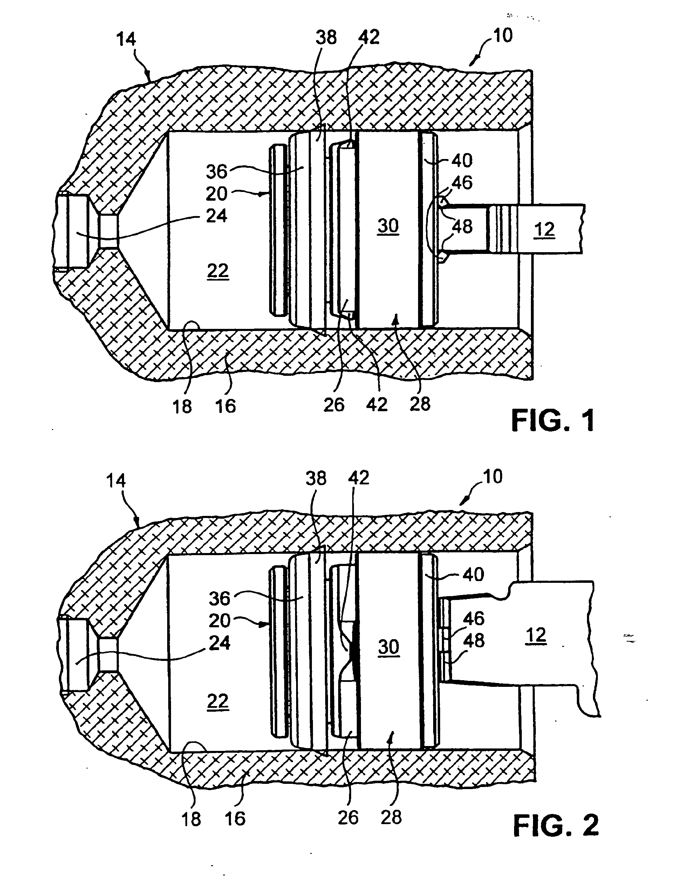

Die Fig. 1 und 2 zeigen eine hydraulische Stellvorrichtung 10 für die Betätigung einer Schaltstange 12 eines Schaltgetriebes für Kraftfahrzeuge, welches ein Getriebegehäuse 14 aus einer Leichtmetallegierung wie einer Aluminium- oder Magnesiumlegierung aufweist, von dem lediglich eine Wandung 16 dargestellt ist. Die Wandung 16 hat eine durch ein spanendes Fertigungsverfahren, z.B. Bohren oder Fräsen, eingebrachte Zylinderbohrung 18, die nicht-armiert ausgebildet ist, d.h. keine weitere Armierung oder Auskleidung in Form einer Büchse, Hülse oder dergl. aufweist. In der Zylinderbohrung 18 ist ein nachfolgend noch näher beschriebener Kolben 20 aus Kunststoff angeordnet, der auf ebenfalls noch zu beschreibende Weise mit der Schaltstange 12 wirkverbunden ist und bei hydraulischer Beaufschlagung die Schaltstange 12 radial geführt axial verschiebt.

Bei der Schaltstange 12 handelt es sich um ein herstellungstechnisch günstiges metallisches Stanzteil, von dem in den Fig. 1 und 2 lediglich ein Ende dargestellt ist. Das nicht gezeigte andere Ende der Schaltstange 12 ist für einen Schiebebetrieb ebenfalls mit einem Kolben einer spiegelsymmetrisch ausgebildeten Stellvorrichtung wirkverbunden. Die Schaltstange 12 trägt weiterhin eine Schaltgabel (nicht dargestellt) und kann für einen Gangwechsel des Schaltgetriebes mittels der endseitigen Stellvorrichtungen wahlweise aus einer auf an sich bekannte Weise mechanisch verrasteten Mittelstellung in den Fig. 1 und 2 nach links oder rechts bewegt werden.

Die als zylindrische Sackbohrung ausgeführte Zylinderbohrung 18 begrenzt auf der in den Fig. 1 und 2 linken Seite des Kolbens 20 einen Druckraum 22 zur hydraulischen Beaufschlagung des Kolbens 20. Der Druckraum 22 ist am in den Fig. 1 und 2 linken Ende der Zylinderbohrung 18 über einen Druckmittelanschluß 24 unter Zwischenschaltung eines Ventilmechanismus (nicht dargestellt) an eine Druckmittelversorgung (nicht dargestellt) angeschlossen. Als Druckmittel wird vorzugsweise das Getriebeöl verwendet, so daß die Stellvorrichtung 10 im Sumpfbetrieb arbeiten kann, bei dem das Leckage- oder Rücklauföl von der Stellvorrichtung 10 sowohl über den Druckmittelanschluß 24 als auch über den Außenumfang des Kolbens 20 wieder direkt in die Getriebewanne (nicht dargestellt) ablaufen kann.

In der Zylinderbohrung 18 ist nun der sowohl die axiale Verschiebung der Schaltstange 12 als auch die radiale Führung bzw. Lagerung der Schaltstange 12, d.h. ebenfalls eine Aufnahme der Querkräfte bewirkende Kolben 20 mit geringfügigem Radialspiel aufgenommen. Der in den Fig. 3 bis 13 näher dargestellte Kolben 20 hat im dargestellten Ausführungsbeispiel einen aus Kunststoff einteilig spritzgegossenen Grundkörper 26 und einen Führungsabschnitt 28, dessen Durchmesser geringfügig größer als der Durchmesser des Grundkörpers 26 ist, wie insbesondere die Fig. 4 bis 7 zeigen. Der am Außenumfang zylindrische Führungsabschnitt 28 ist durch einen geschlossenen, hülsen- bzw. rohrförmigen Führungsring 30 aus Kunststoff gebildet, der an bzw. auf einem zylindrischen Führungssitz 32 des Grundkörpers 26 angeordnet und dort auf noch zu beschreibende Weise formschlüssig befestigt ist.

Auf der im eingebauten Zustand des Kolbens 20 dem Druckraum 22 zugewandten Seite des Führungsabschnitts 28 weist der Grundkörper 26 weiterhin eine Radialnut 34 auf, in der ein konventioneller und deshalb nicht näher beschriebener Nutring 36 angeordnet ist. Wie deutlich in den Fig. 1 und 2 zu erkennen ist, die den Nutring 36 der Einfachheit halber im unverformten Zustand darstellen, ist die dynamische Dichtlippe 38 des Nutrings 36 vom Druckraum 22 weggewandt, d.h. der Nutring 36 ist in der Radialnut 34 in einer zur Normallage umgekehrten Funktionslage angeordnet.

Im dargestellten Ausführungsbeispiel ist zur formschlüssigen Festlegung des Führungsrings 30 am Führungssitz 32 auf der in den Fig. 1, 2, 4 bis 7, 9 und 10 rechten Seite des Führungsrings 30 ein gegenüber dem Außendurchmesser des Führungsrings 30 im Durchmesser kleinerer Ringbund 40 am Grundkörper 26 vorgesehen, an dem sich der Führungsring 30 abstützen kann und der den Grundkörper 26 nach rechts abschließt. Auf der gegenüberliegenden, d.h. in den erwähnten Figuren linken Seite des Führungsrings 30 ist der Grundkörper 26 mit in radialer Richtung geringfügig vom Grundkörper 26 vorstehenden Vorsprüngen bzw. Noppen 42 versehen. Die im dargestellten Ausführungsbeispiel diametral gegenüberliegend angeordneten zwei Vorsprünge 42 halten den Führungsring 30 in Anlage am Ringbund 40 und sind zur Radialnut 34 des Grundkörpers 26 hin leicht abgeschrägt, um die Montage bzw. das Aufziehen des Führungsring 30 auf den Führungssitz 32 zu erleichtern.

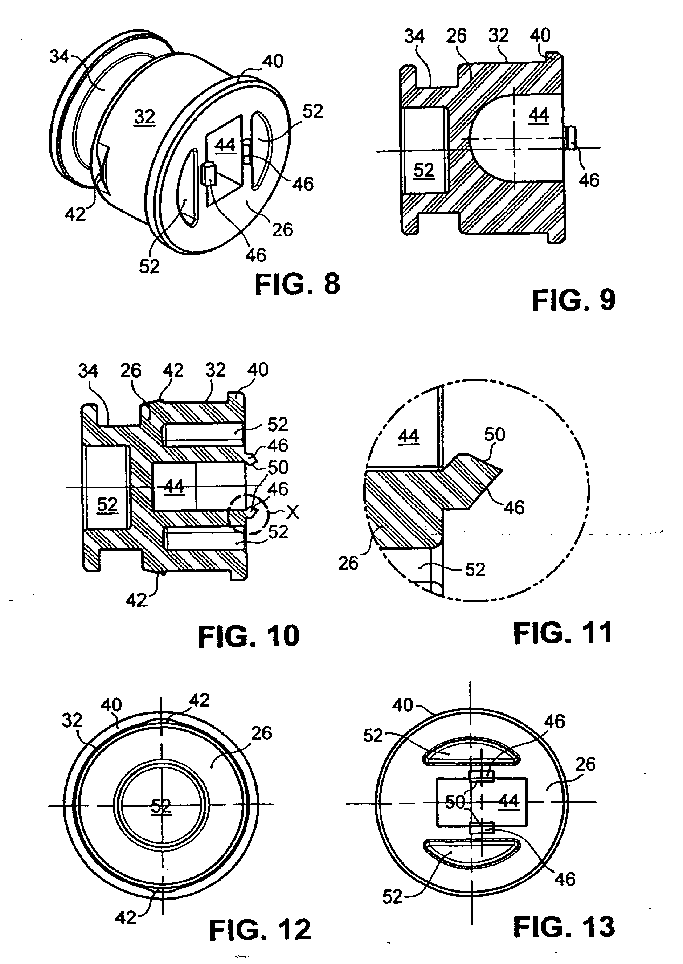

Die Wirkverbindung zwischen der Schaltstange 12 und dem Kolben 20 wird im dargestellten Ausführungsbeispiel mittels einer Schnappverbindung hergestellt. Hierzu ist der Grundkörper 26 des Kolbens 20 auf seiner vom Druckraum 22 abgewandten Seite mit einer im Querschnitt rechteckigen Aussparung 44 versehen, in der eine Ende der Schaltstange 12 mit geringfügigem Spiel aufgenommen ist. Eingangs der Aussparung 44 sind zu beiden Seiten der Aussparung 44 Nasen 46 einstückig mit dem Grundkörper 26 ausgebildet, die vom Grundkörper 26 nach radial innen vorstehen und gemäß Fig. 2 in einer zugeordneten nutartigen Vertiefung 48 der Schaltstange 12 eingerastet sind. Wie insbesondere die Fig. 10 und 11 zeigen, sind die Nasen 46 auf den einander zugewandten Seiten jeweils mit einer Fügeschräge 50 versehen, um das axiale Fügen von Schaltstange 12 und Kolben 20 zu erleichtern.

Zum Grundkörper 26 des Kolbens 20 ist schließlich noch anzumerken, daß der Grundkörper 26 an den Übergängen seiner einzelnen Bereiche insgesamt mit Fasen und Verrundungen versehen ist, die z.T. fertigungsbedingt sind und die Handhabung des Kolbens 20 erleichtern. Auch weist der Grundkörper 26 ausgehend von seinen Stirnseiten weitere Aussparungen 52 auf, die gewichtsreduzierend wirken und in fertigungstechnischer Hinsicht Schrumpfung, Einfall und Verzug des Grundkörpers 26 durch Ausbildung von im wesentlichen gleichen Wandstärken verhindern.

Es wurde bereits eingangs erwähnt, daß der Grundkörper 26 des Kolbens 20 entweder aus einem vorzugsweise langfaserverstärkten Polyamid (PA) oder aus einem faserverstärkten, teilkristallinen Hochleistungspolymer basierend auf Polyphthalamiden (PPA) oder Polyphenylensulfiden (PPS) bestehen kann. Der Grundkörper 26 sollte vornehmlich aus Kostengründen vorzugsweise aus PA bestehen. Bei dem Material des Führungsrings 30 kann es sich dann entweder um einen auf Polytetrafluorethylen (PTFE) basierenden Werkstoff oder wiederum um PPA oder PPS handeln. Wird als Werkstoff für den Führungsring 30 PTFE verwendet, ist es grundsätzlich möglich, auf den oben beschriebenen Nutring 36 zu verzichten.

Für den Fachmann ist ersichtlich, daß weitere Abwandlungen und Modifikationen insbesondere des beschriebenen Kolbens möglich sind. So kann der Grundkörper des Kolbens bei entsprechendem Werkstoff anstelle der Ausbildung mit Radialnut und Nutring auch mit einer einteilig angespritzten Lippe versehen sein, die vom Druckraum weggewandt ist, um u.a. im Stillstand des Kolbens ein Auslaufen von Hydraulikflüssigkeit zu verhindern. Obgleich in den Figuren nicht dargestellt, kann der Kolben ferner mit einem integrierten Sensor versehen sein, der ein elektronisch gesteuertes Anfahren der gewünschten Schaltstangenposition ermöglicht. Schließlich ist die Stellvorrichtung grundsätzlich auch mit einem doppeltwirkenden, d.h. wahlweise auf der einen oder auf der anderen Seite oder beidseitig beaufschlagbaren Kolben denkbar, der auf einer Seite der Schaltstange positioniert ist, während am anderen Ende der Schaltstange lediglich ein Gleitlager vorgesehen ist. Besondere Vorkehrungen zur Überbrückung von Spaltmaßen zwischen Zylinderbohrung und Kolben müßten dann nicht getroffen werden. Es wäre jedoch dafür Sorge zu tragen, daß bei beidseitiger Beaufschlagung des Kolbens, unter der eine Zentrierung des Kolbens erfolgt, ein druckloser Ablauf der Hydraulikflüssigkeit zum Getriebesumpf gewährleistet ist.

Hinsichtlich der Laufpaarung Zylinderbohrung 18 / Kolben 20 sei an dieser Stelle noch angemerkt, daß die Zylinderbohrung 18 ohne weitere Nachbearbeitung ausgebildet werden kann. So ist es grundsätzlich nicht erforderlich, die Zylinderbohrung 18 zusätzlich zu glätten, nachdem sie spanend mittels beispielsweise eines Bohrers oder eines Fräsers ausgebildet wurde. Eine gemittelte Rauhtiefe Rz nach DIN 4768 von etwa 12 um ist hier ausreichend. Ebenso ist eine Oberflächenhärtebehandlung der Lauffläche der Zylinderbohrung 18 grundsätzlich entbehrlich, weil im beschriebenen Anwendungsfall eine geringfügige Leckage über den Kolben 20 gestattet ist (Sumpfbetrieb), d.h. eine Abdichtung mittels eines Dichtelements im herkömmlichen Sinne nicht erfolgt, so daß insofern auch keine Oberflächenmaßnahmen zur Vermeidung von Abrieb an der Lauffläche der Zylinderbohrung 18 erforderlich sind.

Im Hinblick auf das Passungsspiel zwischen Zylinderbohrung 18 und Kolben 20 ist schließlich noch auszuführen, daß dieses vor dem Hintergrund der zulässigen Leckage bei ausreichenden Führungseigenschaften zu formulieren ist. Hierbei sind die einschlägigen Kennwerte des Kunststoffs für den Kolben 20 bzw. den Führungsring 30 zu berücksichtigen, wie die Aufquellwerte im Hydraulikmedium, die Wasseraufnahme aus der Umgebungsluft und die Wärmedehnungen bei Betriebstemperatur. Es hat sich gezeigt, daß unter Berücksichtigung dieser Kennwerte der anfängliche Außendurchmesser des Führungsabschnitts 28 des Kolbens 20, d.h. der Außendurchmesser des Führungsabschnitts 28 des Kolbens 20 zum Zeitpunkt der Montage der Stellvorrichtung 10 und bei Umgebungstemperatur etwa 5 bis 10% kleiner als der Nenndurchmesser der Zylinderbohrung 18 sein sollte. Dieses somit vorgegebene anfängliche Passungsspiel wird sich im Betrieb der hydraulischen Stellvorrichtung 10 über die Zeit noch verringern, weil der Führungsabschnitt 28 des Kolbens 20 - wie eingangs bereits erwähnt - unter den vorherrschenden Betriebsdrücken und -temperaturen auch eine plastische Deformation (Stauchung bzw. Aufweitung) erfährt, wodurch hier die Dichtwirkung ebenfalls verbessert wird.

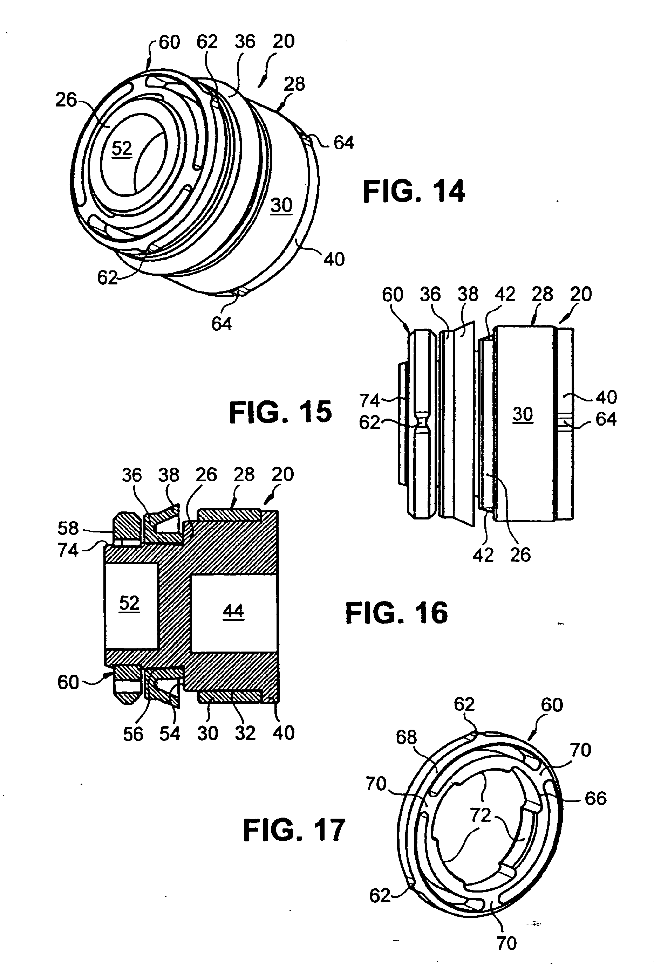

Die Fig. 14 bis 17 zeigen Einzelheiten eines Kolbens 20 eines zweiten Ausführungsbeispiels der hydraulischen Stellvorrichtung 10, welches nachfolgend nur hinsichtlich der sich vom ersten Ausführungsbeispiel unterscheidenden Merkmale beschrieben werden soll.

Wie insbesondere der Fig. 16 zu entnehmen ist, weist bei diesem Ausführungsbeispiel der Grundkörper 26 des Kolbens 20 einen sich über eine Ringschulter 54 an den Führungssitz 32 für den Führungsring 30 anschließenden, im Durchmesser kleineren Absatz 56 auf, auf dem der Nutring 36 angeordnet ist. Der Absatz 56 des Grundkörpers 26 ist an seinem im eingebauten Zustand des Kolbens 20 dem Druckraum 22 zugewandten Ende mit einer Radialnut 58 versehen, in die ein in Fig. 17 einzeln dargestellter, vorzugsweise spritzgegossener Kunststoffring 60 eingesetzt ist. Der Nutring 36 wird somit zwischen dem Kunststoffring 60 und der Ringschulter 54 auf dem Absatz 56 des Kolbengrundkörpers 26 gehalten.

Wie am besten in den Fig. 14, 15 und 17 zu erkennen ist, ist der Kunststoffring 60 außenumfangsseitig mit einer Mehrzahl von Stützvorsprüngen 62, im dargestellten Ausführungsbeispiel drei gleichmäßig am Umfang verteilten Stützvorsprüngen 62 versehen, deren Spitzen auf einem Kreis liegen, dessen Durchmesser in etwa dem anfänglichen Außendurchmesser des Führungsrings 30 entspricht bzw. geringfügig größer ist als dieser. Gleichermaßen ist der Bund 40 am anderen Ende des Grundkörpers 26 außenumfangsseitig mit einer Mehrzahl von Stützvorsprüngen 64, im dargestellten Ausführungsbeispiel drei gleichmäßig am Umfang verteilten Stützvorsprüngen 64 versehen, deren Spitzen ebenfalls auf einem Kreis liegen, dessen Durchmesser in etwa dem anfänglichen Außendurchmesser des Führungsrings 30 entspricht bzw. geringfügig größer ist als dieser. Es ist ersichtlich, daß die im eingebauten Zustand des Kolbens 20 mit der Zylinderbohrung 18 zusammenwirkenden Stützvorsprünge 62, 64 ein Verkanten bzw. Verklemmen des Kolbens 20 und damit auch eine übermäßige einseitige Verformung des Führungsrings 30 und des Nutrings 36 zuverlässig verhindern. Außerdem dienen die Stützvorsprünge 62, 64 wie eingangs bereits beschrieben als Montagehilfe.

Gemäß insbesondere Fig. 17 weist der Kunststoffring 60 einen inneren Kreisringabschnitt 66 und einen äußeren Kreisringabschnitt 68 auf, die über Stege 70 miteinander verbunden sind. Im dargestellten Ausführungsbeispiel sind drei gleichmäßig über den Umfang verteilte Stege 70 vorgesehen. In Umfangsrichtung gesehen zwischen den Stegen 70 sind am Innenumfang des inneren Kreisringabschnitts 66 drei gleichmäßig über den Umfang verteilte, bogensegmentförmige Vorsprünge 72 ausgebildet. Die Vorsprünge 72 definieren innenumfangsseitig eine Zylinderfläche, deren Durchmesser in etwa dem Außendurchmesser am Grund der Radialnut 58 im Absatz 56 des Kolbengrundkörpers 26 entspricht. Es ist ersichtlich, daß, wenn der Kunststoffring 60 zur Montage am Grundkörper 26 auf den Absatz 56 über einen in den Fig. 15 und 16 dargestellten konischen Fügeabschnitt 74 aufgeschoben wird, die Vorsprünge 72 zunächst nach radial außen wegfedern können, um sodann in der Radialnut 58 im Absatz 56 einzurasten und den Kunststoffring 60 in der Art einer Schnappverbindung am Grundkörper 26 festzulegen.

Obgleich oben beschrieben wurde, daß der Kunststoffring 60 an dem im eingebauten Zustand des Kolbens 20 dem Druckraum 22 zugewandten Ende des Kolbengrundkörpers 26 vorgesehen ist, während sich der Bund 40 am vom Druckraum 22 abgewandten Ende des Grundkörpers 26 befindet, können der Bund 40 und der Kunststoffring 60 in ihrer Anordnung auch vertauscht werden. Entsprechendes gilt für den Führungsring 30 und den Nutring 36, d.h. der Führungsring 30 kann auch an dem dem Druckraum 22 zugewandten Ende des Grundkörpers 26 angeordnet sein, während sich der entgegengesetzt zur üblichen Funktionslage montierte Nutring 36 am vom Druckraum 22 abgewandten Ende des Grundkörpers 26 befindet.

### Bezugszeichenliste

- 10: Stellvorrichtung
- 12: Schaltstange
- 14: Getriebegehäuse
- 16: Wandung
- 18: Zylinderbohrung
- 20: Kolben
- 22: Druckraum
- 24: Druckmittelanschluß
- 26: Grundkörper
- 28: Führungsabschnitt
- 30: Führungsring
- 32: Führungssitz
- 34: Radialnut
- 36: Nutring
- 38: dynamische Dichtlippe
- 40: Ringbund
- 42: Vorsprung
- 44: Aussparung
- 46: Nase
- 48: Vertiefung
- 50: Fügeschräge
- 52: Aussparung
- 54: Ringschulter
- 56: Absatz
- 58: Radialnut
- 60: Kunststoffring
- 62: Stützvorsprung
- 64: Stützvorsprung
- 66: innerer Kreisringabschnitt
- 68: äußerer Kreisringabschnitt
- 70: Steg
- 72: Vorsprung
- 74: konischer Fügeabschnitt

## Patentansprüche

1. Hydraulische Stellvorrichtung (10) für die Betätigung einer Schaltstange (12) insbesondere eines Schaltgetriebes für Kraftfahrzeuge, mit einer in einer Wandung (16) eines Getriebegehäuses (14) eingebrachten Bohrung zur Aufnahme eines mit der Schaltstange (12) wirkverbundenen Kolbens (20), der einen Druckraum (22) begrenzt und bei hydraulischer Beaufschlagung die Schaltstange (12) radial geführt axial verschiebt, wobei der Kolben (20) einen Grundkörper (26) und einen Führungsabschnitt (28) aufweist, über den der Kolben (20) unmittelbar an der als nicht-armierte Zylinderbohrung (18) ausgebildeten Bohrung in der Wandung (16) des Getriebegehäuses (14) geführt ist, **dadurch gekennzeichnet, daß** das Getriebegehäuse (14) aus einer Leichtmetallegierung besteht, während der Kolben (20) und der Führungsabschnitt (28) aus Kunststoff bestehen, wobei letzterer durch einen an einem Führungssitz (32) des Grundkörpers (26) angeordneten Führungsring (30) ausgebildet ist, der formschlüssig am Führungssitz (32) befestigt ist, indem der Führungsring (30) zwischen einem am Grundkörper (26) ausgebildeten Bund (40) und mindestens einem vom Grundkörper (26) in radialer Richtung vorstehenden Vorsprung (42) auf dem Führungssitz (32) angeordnet ist.

2. Stellvorrichtung (10) nach Anspruch 1, **dadurch gekennzeichnet, daß** der Grundkörper (26) des Kolbens (20) aus Polyamid (PA) besteht, während es sich bei dem Material des Führungsrings (30) um Polyphthalamid (PPA) oder Polyphenylensulfid (PPS) handelt.

3. Stellvorrichtung (10) nach Anspruch 1, **dadurch gekennzeichnet, daß** der Grundkörper (26) des Kolbens (20) aus Polyamid (PA) besteht, während es sich bei dem Material des Führungsrings (30) um Polytetrafluorethylen (PTFE) handelt.

4. Stellvorrichtung (10) nach einem der vorhergehenden Ansprüche, **dadurch gekennzeichnet, daß** der Grundkörper (26) auf der dem Druckraum (22) zugewandten Seite des Führungsabschnitts (28) eine Radialnut (34) oder einen Absatz (56) aufweist, in der bzw. auf dem ein an sich bekannter Nutring (36) angeordnet ist, dessen dynamische Dichtlippe (38) vom Druckraum (22) weggewandt ist.

5. Stellvorrichtung (10) nach einem der vorhergehenden Ansprüche, **dadurch gekennzeichnet, daß** der Grundkörper (26) an einem Ende eine Radialnut (58) aufweist, in die ein Kunststoffring (60) eingesetzt ist, der außenumfangsseitig mit einer Mehrzahl von mit der Zylinderbohrung (18) zusammenwirkenden Stützvorsprüngen (62) versehen ist.

6. Stellvorrichtung (10) nach Anspruch 5, **dadurch gekennzeichnet, daß** der Grundkörper (26) an seinem anderen Ende einen Bund (40) aufweist, der außenumfangsseitig mit einer Mehrzahl von mit der Zylinderbohrung (18) zusammenwirkenden Stützvorsprüngen (64) versehen ist.

7. Stellvorrichtung (10) nach einem der vorhergehenden Ansprüche, **dadurch gekennzeichnet, daß** die Schaltstange (12) mit dem Kolben (20) mittels einer Schnappverbindung verbunden ist.

8. Stellvorrichtung (10) nach Anspruch 7, **dadurch gekennzeichnet, daß** der Kolben (20) mit einer Aussparung (44) zur Aufnahme eines Endes der Schaltstange (12) versehen ist und eingangs der Aussparung (44) mindestens eine Nase (46) aufweist, die in einer zugeordneten Vertiefung (48) der Schaltstange (12) eingerastet ist.

9. Stellvorrichtung (10) nach einem der vorhergehenden Ansprüche, **dadurch gekennzeichnet, daß** der Grundkörper (26) des Kolbens (20) einteilig aus Kunststoff spritzgegossen ist.

## Claims

1. Hydraulic control device (10) for operating a sliding selector shaft (12), in particular of a gearbox for motor vehicles, with a bore made in a wall (16) of a gearbox housing (14) to accommodate a piston (20) actively connected to the sliding selector shaft (12), which delimits a pressure chamber (22) and which, under hydraulic pressure, radially guides and axially displaces the sliding selector shaft (12), wherein the piston (20) has a body (26) and a guide section (28) via which the piston (20) is guided directly on the bore made as a non-reinforced cylinder bore (18) in the wall (16) of the gearbox housing (14), **characterized in that** the gearbox housing (14) consists of a light metal alloy, whereas the piston (20) and the guide section (28) consist of plastic, wherein the latter is formed by a guide ring (30) disposed on a guide seat (32) of the body (26), which guide ring is positively connected to the guide seat (32), by the guide ring (30) being disposed on the guide seat (32) between a collar (40) formed on the body (26) and at least one projection (42) projecting from the body (26) in the radial direction.

2. Control device (10) according to claim 1, **characterized in that** the body (26) of the piston (20) consists of polyamide (PA), whereas the material of the guide ring (30) is polyphthalamide (PPA) or polyphenylene sulphide (PPS).

3. Control device (10) according to claim 1, **characterized in that** the body (26) of the piston (20) consists of polyamide (PA), whereas the material of the guide ring (30) is polytetrafluoroethylene (PTFE).

4. Control device (10) according to one of the preceding claims, **characterized in that** on the side of the guide section (28) facing the pressure chamber (22), the body (26) has a radial groove (34) or a shoulder (56) in or on which a grooved ring (36) known per se is disposed whose dynamic sealing lip (38) is facing away from the pressure chamber (22).

5. Control device (10) according to one of the preceding claims, **characterized in that**, at one end, the body (26) has a radial groove (58) into which a plastic ring (60) is inserted, the outside perimeter of which is provided with a number of supporting projections (62) interacting with the cylinder bore (18).

6. Control device (10) according to claim 5, **characterized in that**, at the other end, the body (26) has a collar (40), the outside perimeter of which is provided with a number of supporting projections (64) interacting with the cylinder bore (18).

7. Control device (10) according to one of the preceding claims, **characterized in that** the sliding selector shaft (12) is connected to the piston (20) via a snap connection.

8. Control device (10) according to claim 7, **characterized in that** the piston (20) is provided with a recess (44) to accommodate one end of the sliding selector shaft (12) and has at least one lug (46) at the beginning of the recess (44) which is engaged in a corresponding depression (48) of the sliding selector shaft (12).

9. Control device (10) according to one of the preceding claims, **characterized in that** the body (26) of the piston (20) is integrally injection molded from plastic.

## Revendications

1. Actionneur hydraulique (10) pour l'actionnement d'une tringle ou tige de commande de changement de vitesses (12), notamment d'une boite de vitesses pour véhicules automobiles, comprenant un alésage réalisé dans une paroi (16) d'un carter de boite de vitesses (14) et destiné à recevoir un piston (20) qui est en liaison interactive avec la tringle de commande de changement de vitesses (12), délimite une chambre de pression (22), et qui en cas d'alimentation hydraulique déplace axialement en la guidant radialement, la tringle de commande de changement de vitesses (12), le piston (20) présentant un corps de base (26) et un tronçon de guidage (28) par l'intermédiaire duquel le piston (20) est guidé directement dans l'alésage réalisé en tant qu'alésage cylindrique (18) non armé dans la paroi (16) du carter de boite de vitesses (14),
**caractérisé en ce que** le carter de boite de vitesses (14) est réalisé en un alliage de métaux légers, tandis que le piston (20) et le tronçon de guidage (28) sont réalisés en matière plastique, ce dernier étant formé par une bague de guidage (30), qui est agencée sur une portée de guidage (32) du corps de base (26), et est fixée sur la portée de guidage (32) par complémentarité de formes, à savoir que la bague de guidage (30) est agencée sur la portée de guidage (32) entre une collerette (40) formée sur le corps de base (26) et au moins une protubérance (42) faisant saillie du corps de base (26) dans la direction radiale.

2. Actionneur (10) selon la revendication 1, **caractérisé en ce que** le corps de base (26) du piston (20) est réalisé en polyamide (PA), tandis qu'il s'agit en ce qui concerne le matériau de la bague de guidage (30), de polyphtalamide (PPA) ou de polysulfure de phénylène (PPS).

3. Actionneur (10) selon la revendication 1, **caractérisé en ce que** le corps de base (26) du piston (20) est réalisé en polyamide (PA), tandis qu'il s'agit en ce qui concerne le matériau de la bague de guidage (30), de polytétrafluoroéthylène (PTFE).

4. Actionneur (10) selon l'une des revendications précédentes, **caractérisé en ce que** le corps de base (26) présente, sur le côté du tronçon de guidage (28), qui est dirigé vers la chambre de pression (22), une rainure radiale (34) ou un décrochement (56) dans laquelle ou respectivement sur lequel est agencé une bague d'étanchéité à lèvre (36) connue en soi, dont la lèvre d'étanchéité dynamique (38) est éloignée de la chambre de pression (22).

5. Actionneur (10) selon l'une des revendications précédentes, **caractérisé en ce que** le corps de base (26) présente, à une extrémité, une rainure radiale (58) dans laquelle est insérée une bague de matière plastique (60) qui est pourvue, sur le côté de la périphérie extérieure, d'une pluralité de protubérances d'appui (62) interagissant avec l'alésage cylindrique (18).

6. Actionneur (10) selon la revendication 5, **caractérisé en ce que** le corps de base (26) présente à son autre extrémité, une collerette (40) qui est pourvue, sur le côté de la périphérie extérieure, d'une pluralité de protubérances d'appui (64) interagissant avec l'alésage cylindrique (18).

7. Actionneur (10) selon l'une des revendications précédentes, **caractérisé en ce que** la tringle de commande de changement de vitesses (12) est reliée au piston (20) au moyen d'une liaison par encliquetage.

8. Actionneur (10) selon la revendication 7, **caractérisé en ce que** le piston (20) est pourvu d'un évidement (44) destiné à recevoir une extrémité de la tringle de commande de changement de vitesses (12), et présente, à l'entrée de l'évidement (44) au moins un talon (46), qui s'enclenche dans un creux (48) associé de la tringle de commande de changement de vitesses (12).

9. Actionneur (10) selon l'une des revendications précédentes, **caractérisé en ce que** le corps de base (26) du piston (20) est moulé par injection, d'un seul tenant, en matière plastique.
